# EUROPEAN PATENT APPLICATION

(11) **EP 1 840 425 A1**
(43) Date of publication of application: **03.10.2007**
(21) Application number: 05819445.7
(22) Date of filing: 26.12.2005
(51) Int. Cl.: F16J 15/32

(54) **SHAFT SEALING DEVICE**

(30) Priority: 28.12.2004 JP 2004381433
(71) Applicant: EAGLE INDUSTRY Co., Ltd., Tokyo 105-8587 (JP)
(72) Inventor: SANADA, Masamitsu, c/o Eagle Industry co., Ltd., Tokyo 105-8587 (JP)
(74) Representative: Wiebusch, Manfred
(86) International application number: PCT/JP2005/023751
(87) International publication number: WO 2006/070725

(57) **Abstract**

A shaft sealing device whose parts can be produced and assembled on a material-by-material basis to enable cost of the parts to be reduced and in which the parts can be disassembled on a material-by-material basis to enable the materials to be reused. A shaft sealing device (1) is composed of a seal section (2), a reinforcement ring (5), and a seal sleeve (10). The seal section (2) is made from a rubber-like elastic material and has a fitting section (4) sealingly fittable on a hole forming surface of a housing (60); a fitting recess section (4B) formed in a region that is from a side surface on the opposite side of to-be-sealed fluid (L) of the fitting section (4) to the to-be-sealed fluid (L) side; an annular seal lip (3) provided on the inner periphery of the fitting section (4); and a seal surface (3A1) provided inside the seal lip (3). The reinforcement ring (5) has a reinforcement section (5) renovably fitted in the fitting recess section (4B) of the fitting section (4) and a support section (5B) for supporting the back side of the seal lip (3). The seal sleeve is made from metal or resin and has a sliding seal surface (10D) capable of sliding while in intimate contact with the seal surface (3A1); a first stopper (10A) capable of engaging with the seal lip (3), at one end of the sliding seal surface (10D); a second stopper (10B) capable of engaging with the support section (5B), at the other end, which is on the opposite side of the one end, of the sliding seal surface (10D); and an intimate contact fitting surface (15) sealingly fitting on a rotating shaft (50).

## Description

### TECHNICAL FIELD

The present invention relates to a shaft seal device which tightly seals a sealed fluid residing in a clearance gap between a rotary shaft being mounted in a bore of the housing and the bore surface of the housing. More particularly, the invention relates to a shaft seal device in which assembly of a seal portion which is made of a rubber resilient material and a reinforcement annulus which provides the seal portion with a reinforcement is configured in a detachable manner, in which not only material based assembly of the members is made possible but also material based disassembly of the members is made possible for recycling of the materials, in which characteristics of the materials are well exhibited.

### BACKGROUND ART

There are variety of shaft seal devices as a prior art related to the present invention. This shaft seal device is employed for providing a seal around a rotary shaft of water pump of automobiles or the like. Action fluid used in the water pumps or the like operates as a high pressure sealed fluid inside cavities located around the rotary shaft. The sealed fluid then contains impurities. These impurities, in particular, which are caught on the seal faces cause abrasion of the rotary shaft. The rotary shaft which is mounted in an apparatus is not straightforward to be replaced from the cost perspective. Furthermore the high pressure sealed fluid forces the seal lips which effect a seal against the sealed fluid in the circumference of a rotary shaft to be pressed against the periphery surface of the rotary shaft. While rubber-made seal lips or resin-made seal lips receive a high pressure from sealed fluid while making a secure contact with the rotary shaft, the slide seal faces of the rotary shaft and the seal lips will be worn out. In the shaft seal device like this, without exception, a metal-made reinforcement annulus and a rubber-made seal lip are baked to one another so as to constitute an integral structure. Therefore, an attempt to disintegrate the members based on different materials in order to recycle the members of a used shaft seal device is not a straightforward task because the baked integral structure of the reinforcement annulus and the seal lip makes a material-wise separation and recycling thereof difficult.

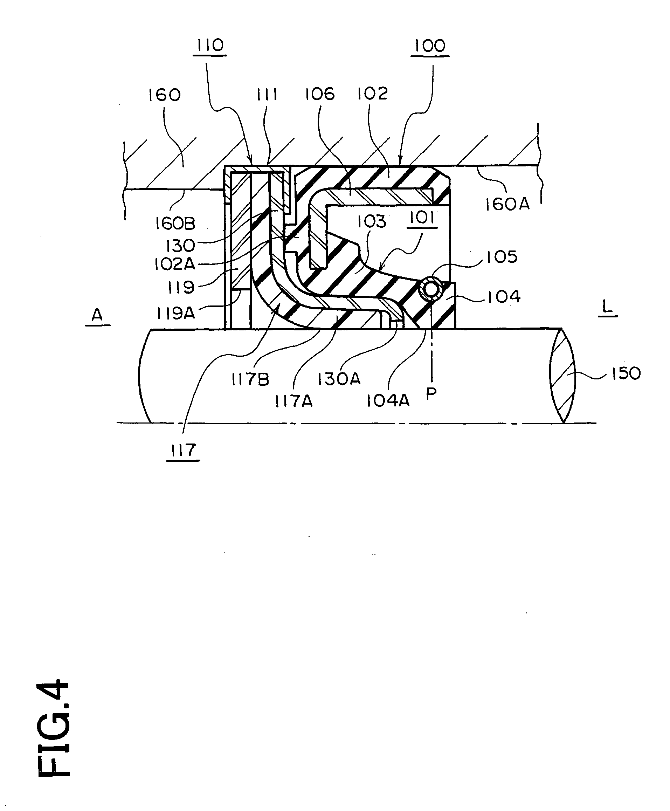

Among these shaft seal devices, a typical shaft seal device which is similar to the present invention can be found in FIG. 4 (see, for example, Japanese Laid-Open Patent Publication No. 2003-120823 (Fig. 7)). FIG. 4 is a cross sectional view of a half portion of such a shaft seal device. This shaft seal device 100 is constructed as shown in FIG. 6. FIG. 6 is a cross-sectional view of a half portion of the shaft seal device 100. The shaft seal device 100 includes a fit engagement member 102 of cylindrical design which has three undulated seal portions 107 along outer circumference thereof. The fit engagement member 102 disposes a reinforcement annulus 103 therewithin in an integral structure. The fit engagement member 102 is provided with reinforcement from the reinforcement annulus 103 so as to form a secure contact with a bore surface (hereafter simply referred to as a bore) 112 of housing 111. Also a first seal lip 101 extends from the fit engagement member 102 in radially inward a direction. In addition, there is disposed a resin-made second seal lip 108 in the external environment side (left side in the figure) with respect to the first seal lip 101. Between the rubber-made first seal lip 101 and the resin-made second seal lip 108 there is disposed a backup ring 106 which is made of thin sheet metal. The second seal lip 108 is secured by means of a fixture member 109 between the backup ring 106 and the fixture member 109. The first seal lip 101 made of rubber material is susceptible to leak of the sealed fluid and the backup ring 106 is intended for preventing such leak of the sealed fluid. Therefore the backup ring 106 is disposed between the first seal lip 101 and the second seal lip 108, being responsible for a full load exerted from the external environment side. When the first seal lip 101, the second seal lip 108 and the backup ring 106 are pressed against the rotary shaft 113 due to the pressure of the sealed fluid, this will increase a possibility of rapid abrasion of the rotary shaft 113. The sealed fluid also tends to include various kinds of impurities during its operation as action fluid. The impurities included in the sealed fluid are deposited on the seal faces of the respective seal lips 101, 108 which come to a contact with the rotary shaft 113. Also a particular composition contained in the sealed fluid may be solidified due to friction heat, which is deposited on the seal faces of the respective seal lips 101, 108 and causes abrasion of opposing slide faces.

The second seal portion 110 which is disposed in the atmospheric A side of the first seal portion 100 has a second seal lip 117 which is made of a resin material. Inner circumference of the second seal lip 117 defines a lip portion 117A which is in a cylindrical form. The inner periphery surface of the lip portion 117A defines a circumferential seal face 117B which forms a close-fit engagement with the rotary shaft 150. There is disposed a backup ring 130 made of a stainless steel sheet to the first seal lip 101 side of the second seal lip 117. This backup ring 117 prevents the sealed fluid from breaking through a rubber material. The backup ring 130, at the same time, provides a support for the hind wall surface of the first seal lip 101 in the atmospheric A side. There also is disposed a stopper member 119 in the atmospheric A side which is made of a steel sheet and provides a support for the second seal lip 117. The outer peripheries of the backup ring 130, the second seal lip 117 and the stopper member 119 are securely fixed by means of a retainer annulus 111 which is made of steel.

The first seal portion 100 and the second seal portion 110 thus configured are arranged axially in parallel to each other via the sealing projection portion 102A forming a close-tight contact therebetween. When these first seal lip 101, second seal lip 117 and backup ring 130 are forced to press against the rotary shaft 150 by the pressure of the sealed fluid L, a danger of rapid abrasion of the pressed contact surfaces and the rotary shaft 150 will increase. Furthermore, since the first seal portion 100 has the reinforcement annulus 106 immersed in the fit engagement member 102, the fit engagement member 102 which is made of rubber must be separated for recycling from the metal reinforcement annulus 106 in order to reuse parts or materials after the first seal portion ceases to function due to heavy abrasion. These two members, however, are hard to be separated from one another because they thermally stick to each other. As for the second seal portion 110, since the retainer annulus 111 which is made of a steel sheet secures the backup ring 130 made of stainless steel, the second seal lip 117 made of a resin material and the stopper member 119 made of a steel sheet, recycling the second seal portion 110 requires breaking of the retainer annulus 111 in order to be separated to individual material basis. This process involves a lot of difficulties. Further, the first seal portion 100 and the second seal portion 110 are joined with each other via a seal-tight contact of the sealing projection portion 102A therebetween. Therefore, since the first seal portion 100 and the second seal portion 110 are separate members, the numbers of these members in stock have to be carefully monitored so as not to suffer from shortage of either member upon assembly. This parts management, however, is not straightforward because these two members are cluttered on the time of assembly.

The present invention is introduced to alleviate the aforementioned problems. A primary technical goal which this invention tries to achieve is to reduce a production cost of a shaft seal device by fabricating members of the shaft seal device on individual material basis and to make material recycling straightforward by enabling parts of the used shaft seal device to be disassembled to individual material basis. Another goal is to prevent the assembled members of the shaft seal device from coming loose after assembly. Yet another goal is to prohibit impurities included in a sealed fluid or compositions to be solidified by friction heat from causing abrasion to the relatively sliding slide surfaces of the rotary shaft and the seal lip, thereby enhancing seal performance of the shaft seal device.

### DISCLOSURE OF THE INVENTION

A primary object of the present invention is to alleviate the above mentioned technical disadvantages, and a solution to such disadvantages is embodied as follows.

A shaft seal device related with the present invention is a shaft seal device for sealing a sealed fluid between the bore of a housing and a rotary shaft. The shaft seal device is comprised of a seal portion and a reinforcement annulus wherein the seal portion further comprises a close-fit engagement portion, an engagement recess portion, a seal lip and a seal face wherein the close-fit engagement portion has a fit engagement surface, wherein the fit engagement surface is capable of making a tight-fit engagement with the bore surface of the housing, wherein the engagement recess portion forms a groove in the close-fit engagement portion, wherein the engagement recess portion has an opening in the side wall opposite the sealed fluid and extends toward the sealed fluid side, wherein the engagement recess portion is arranged in an annular form, wherein the seal lip is disposed in the inner circumference of the close-fit engagement portion and has an annularly-shaped integral structure, wherein the seal face is disposed in the inner circumference of the seal lip and seals a sealed fluid, wherein the seal portion is made of a rubber resilient material, wherein the reinforcement annulus further comprises a reinforcement portion and a support portion, wherein the reinforcement portion provides a reinforcement for the close-fit engagement portion by matingly fitting the engagement recess portion of the close-fit engagement portion in freely detachable a manner, wherein the support portion provides a support for the hind surface of the seal lip, wherein there is disposed a seal sleeve which comprises a slide seal face, a first stopper, a second stopper and tight-fit engagement surface in which the slide seal face forms a slidable, seal-tight contact with the seal face of the seal portion, in which the first stopper is disposed in one end portion of the seal face side of the slide seal face so as to be able to abut the seal lip, in which the second stopper is disposed in the other end opposite the one end of the slide seal face so as to be able to abut the support portion, in which the tight-fit engagement surface forms a seal-tight contact with the rotary shaft, in which the seal sleeve is made of a metal or resin material.

The shaft seal device related to the present invention is comprised of a seal portion and a reinforcement annulus wherein the seal portion has an annularly shaped engagement recess portion in which the engagement recess portion is in the form of a groove disposed in a close-fit engagement portion which is made of a rubber resilient material and the engagement recess portion has an opening in the side wall thereof opposite the sealed fluid and extends toward the sealed fluid side, wherein the reinforcement annulus further comprises a reinforcement portion and a support portion in which the reinforcement portion matingly fits the engagement recess portion (also referred to as an engagement groove) of the close-fit engagement portion in freely detachable a manner so as to provide a support for the close-fit engagement portion, in which the support portion provides a support for the hind surface of the seal lip. Therefore when the shaft seal device is to be scrapped after use, the seal portion made of rubber and the reinforcement annulus made of metal can easily be separated one another. This brings a merit that material-based separation and reprocessing of rubber and metal for recycling is made possible. In this assemblable shaft seal device, since rubber and metal are fabricated separately, a cleansing process and adhesion process which were required for the reinforcement annulus in conventional shaft seal devices can be omitted and an increased freedom of choosing less expensive rubber material with a good adhesiveness leads to a significant cost reduction thereof.

In addition, since there is disposed a seal sleeve wherein a first stopper is disposed in one axially end portion of the slide seal face so as to be able to abut the seal lip and a second stopper is disposed in the other axially end portion opposite the one end of the slide seal face so as to be able to abut the support portion and also a tight-fit engagement surface is disposed so as to be able to form a seal-tight contact with the rotary shaft, the seal sleeve can restrain the seal portion and the reinforcement annulus from coming loose after assembly of the seal portion and the reinforcement annulus. Therefore, as the assembly parts for the shaft seal device are maintained under an assembled state, a previous trouble for lack of assembly parts hampering assembly will be prevented. Also since the seal face of the seal lip is subjected to a slide movement against the slide seal face of the seal sleeve which is in a close-fit engagement with the rotary shaft, abrasion of the slide surface of the rotary shaft can be prevented, which is expensive and hard to be replaced. Further, since the slide seal face is disposed on the seal sleeve, it is possible to apply a precision finish thereto so as to make the slide seal face of a small area form a seal-tight contact with the seal face, thereby enhancing seal performance thereof as the result of prevention of abrasion in the slide seal face and the seal face.

### BRIEF DESCRIPTION OF THE DRAWINGS

[FIG.1] FIG. 1 is a cross sectional view of a half portion of the shaft seal device related to the embodiment 1.
[FIG. 2] FIG. 2 is a cross sectional view of a half portion of the first seal lip and the second seal lip in their free form before coming to a fit engagement with a seal sleeve in the shaft seal device of FIG. 1.
[FIG. 3] FIG. 3 is a cross sectional view of a half portion of the shaft seal device 1 related to the embodiment 2.
[FIG. 4] FIG. 4 is a cross sectional view of a half portion of a shaft seal device as a prior art related to the present invention.

### BEST MODE FOR CARRYING OUT THE INVENTION

Described below is details of the figures of preferred embodiments of the present invention according to actual design drawings with accurate dimensional relations.

### EMBODIMENT 1

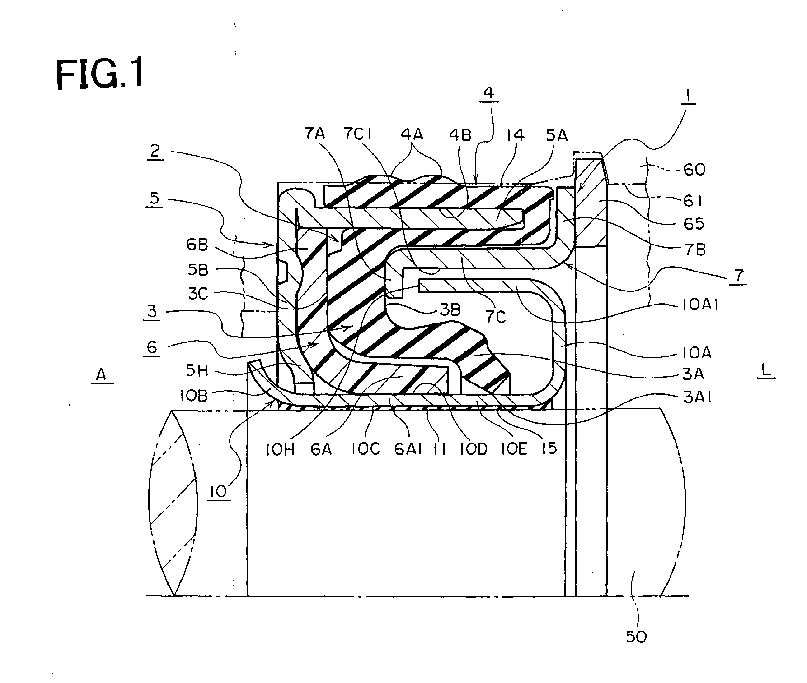

First, a shaft seal device of the embodiment 1 related to the present invention will be described. FIG. 1 shows a cross sectional view of a half portion of a shaft seal device 1. In FIG. 1, a rotary shaft 50 is mounted in a bearing bore 61 in a housing 60. A seal sleeve 10 fitted to the rotary shaft 50 is fabricated in a cylindrical form from a stainless steel sheet. Both ends of the seal sleeve 10 are bent radially outward. A first stopper 10A located in one of the inflected ends is bent to form L-shape cross section from the end and is structured so as to define U-shape cross section including a part of the distal end portion of the cylindrical portion 10E in a surrounding manner relative to an annular lip 3A. That is, the first stopper 10A extends from one end portion of the cylindrical portion 10E and defines a partitioning portion 10Al in tubular design extending to the atmospheric A side so as to surround a first seal face 33A1 of the annular lip portion 3A. Preferably a stop end portion 10H should be disposed at the distal end of the partitioning portion 10A1.

A second stopper 10B in the other end portion is arranged in a circular arc cross section. This second stopper 10B is bent to a circular arc form after assembly of the seal portion 2 and the seal sleeve 10 such that the resulting outer periphery is configured slightly larger than the inner diameter of the inner periphery edge portion 5H of a reinforcement annulus 5. The second stopper 10B alternatively can be modified so as to have a plurality of slits dividing the circumference of the second stopper 10B in equally spaced a manner for ease of bending. The second stopper 10B can therefore be easily formed by bending the other end portion after the reinforcement annulus 5 is assembled with the seal portion 2. An inner circumferential fit engagement surface 10C in the cylindrical portion 10E of the seal sleeve 10 should preferably be kept in a close-fit engagement over its entire surface with a seal ring 11 which is of thin wall cylindrical design. Both end portions of the cylindrical seal ring 11 are arranged to have a thick wall portion of a triangular cross section for bringing the inner circumferential fit engagement surface 10C to a secure contact with the rotary shaft 50. The thick wall portions in the both ends of the seal ring 11 protects the seal ring 11 from coming off even when the seal ring 11 rests in a detachable loose-fit engagement between the rotary shaft 50 and the seal sleeve 10. Alternatively the seal ring 11 can be adhered with the inner circumferential fit engagement surface 10C in a peelable manner. The inner diameter surface of the seal ring 11 defines a seal-tight close-fit engagement surface 15 which forms a close-fit engagement with the rotary shaft 50. The seal-tight close-fit engagement surface 15 provides a seal so as to prohibit the sealed fluid L from leaking to the atmospheric side A between the rotary shaft 50 and the inner circumferential fit engagement surface 10C. The inner circumferential fit engagement surface 10C may alternatively be configured such that the seal-tight close-fit engagement surface 15 is directly engaged with the rotary shaft 50 by omitting the seal ring 11. In particular, in case when the seal sleeve 10 is made of resin material, a direct fit engagement of the inner circumferential fit engagement surface 10C with the rotary shaft 50 as the seal-tight close-fit engagement surface 15 of the seal sleeve 10 can provide a seal between the seal sleeve 10 and the rotary shaft 50. The inner circumferential fit engagement surface 10C can substitute the seal-tight close-fit engagement surface 15 if the seal sleeve 10 employs a similar material to the resin.

On the circumference of the cylindrical portion 10E of the seal sleeve 10 defines a slide seal face 10D. The slide seal face 10D finished as a roll milled steel plate is smooth enough to achieve a low friction slide relative to the seal face 3Al. Also a machining cost for polishing of the slide seal face 10D can be reduced because of its short axial dimension which is formed on the outer periphery surface of the seal sleeve 10. It is alternatively possible to apply a coating of tetrafluoroethylene resin or rubber to the outer circumferential surface of the metal seal sleeve 10, which defines a slide seal surface 10D. Other than stainless steel, a material used for the seal sleeve 10 can be steel, brass, resin, composite material including, for example, acetal or polyamide and reinforcement material, or the like.

A seal portion 2 consists of a close-fit engagement portion 4 and a first seal lip 3 in an integral manner which are made of a rubber material. The close-fit engagement portion 4 is configured in a cylindrical form. The close-fit engagement portion 4 defines a fit engagement surface 14 on the outer circumferential surface thereof which fits the bore surface 61 of housing 60, wherein a seal projection member 4A disposed on the fit engagement surface 14 comes to make a seal-tight contact with the mating bore surface 61 for sealing the sealed fluid L. On the opposite side wall of the close-fit engagement portion 4 with respect to the sealed fluid L, there is disposed an engagement recess portion (annular groove) 4B which is a deep, annular groove which extends inside the close-fit engagement portion 4 along the axial direction. Then the first seal lip 3 is structured as an integral member in an inner circumferential side relative to the close-fit engagement portion 4. The first seal lip 3 has a flanged tubular form inclined toward the sealed fluid L. There is disposed an annular lip member 3A at the front end of the first seal lip 3. The annular lip member 3A defines the first seal face 3A1 which comes to a tight-fit engagement in a slidable manner with the slide seal face 10D of the seal sleeve 10. The first seal face 3A1 retains a sharp square corner in cross section which is brought to make a tight, small area contact with the slide seal face 10D of the seal sleeve 10 for sealing the sealed fluid L. Also the sealed fluid L side of the proximal portion of the first seal lip 3 defines a support surface 3B. In addition, the close-fit engagement portion 4 receives reinforcement from the reinforcement annulus 5 which abuts the close-fit engagement portion 4 in parallel so as to provide reinforcement to the rubber elastic material.

A reinforcement portion 5A of the reinforcement annulus 5 provides reinforcement to the close-fit engagement portion 4 so as to prevent the close-fit engagement portion 4 after a close-fit engagement with the housing from coming loose due to the resilient deformation. Also a support portion 5B of the reinforcement annulus 5 provides the first seal lip 3 with a support so as to resist against the pressure of the sealed fluid L. In other words, the reinforcement annulus 5 is shaped like a bottomed cylinder with bore therein, consisting of a reinforcement portion 5A in a cylindrical form and a support potion 5B corresponding to the bottom portion. The reinforcement portion 5A of the reinforcement annulus 5 engages with the engagement recess portion 4B in freely detachable a manner. The support portion 5B makes a contact with the hind surface of the second seal lip 6, described later, so as to provide a support to the first seal lip 3 and the second seal lip 6. In the inner circumference of the close-fit engagement portion 4, there is further disposed a second seal lip 6 which is made of a resin material and arranged in parallel to the first seal lip 3. This second seal lip 6 has a bight, L-shape cross section and defines a tubular lip portion 6A in the inner periphery thereof. This tubular lip portion 6A is brought to form a seal-tight fit engagement with a slide seal face 10D so as to constitute assembly of the seal sleeve 10 and the second seal lip 6. Outer circumferential root portion 6B of the second seal lip 6 which makes a contact with the hind surface 3C in the root portion of the first seal lip 3 is securely sandwiched between an urging portion 7A of a support annulus 7 and the support portion 5B. Inner circumference of the tubular lip portion 6A defines a second seal face 6A1 which seals the sealed fluid L1 by forming a tight contact with the slide seal face 10D of the seal sleeve 10. The seal portion 2 can omit the second seal lip 6 so as to be assembled with the reinforcement annulus 5 to constitute a shaft seal device 1. Seal performance can be exhibited thereby in the shaft seal device 1. Furthermore, the shaft seal device 1 may be arranged to have the second seal lip 6 sandwiched between the seal portion 2 and the reinforcement annulus 5. The seal portion 2 can be removed without using the support annulus 7.

The support annulus 7 which is made of metal disposes a flange-shaped urging portion 7A at one end of the cylindrical portion 7C which is formed by bending radially inward and a flange portion 7B at the other end. While the support portion 5B of the reinforcement annulus 5 comes to rest with the hind side surface of the root portion 6B of the second seal lip 6 to provide a support thereto, the urging portion 7A of the support annulus 7 comes to rest with the support surface 3B of the first seal lip 3 and therefore the first seal lip 3 and the second seal lip 6 are securely clamped therebetween so as to obtain an integral structure. The inner diameter surface 7C1 of the support annulus 7 comes in a loose fit engagement with the partitioning portion 10A1 of the first stopper 10A under a small clearance gap. A stop end portion 10H of the partitioning portion 10A1 also comes to close proximity to the opposing surface of the urging portion 7A of the support annulus 7, also defining a clearance gap. The seal sleeve 10 which is a separate component which is in a close-fit engagement with the rotary shaft 50 in freely detachable a manner can be replaced easily when it is worn out. With this cost-effective replaceable seal sleeve 10, since the inner circumferential edge portion 5H of the support portion 5B can be brought to close proximity of the seal sleeve 10 which is in a close-fit engagement with the rotary shaft 50, the hind surface of the tubular lip portion 6A of the second seal lip 6 as well as the hind surface of the annular lip portion 3A of the first seal lip 3 are effectively supported thereby against pressure of the sealed fluid L. As a result, the first seal face 3A1 and the second seal face 6A1 are effectively prevented from being pressed against the slide seal face 10C by the sealed fluid, thereby avoiding abrasion of the first seal face 3A1 and the second seal face 6A1.

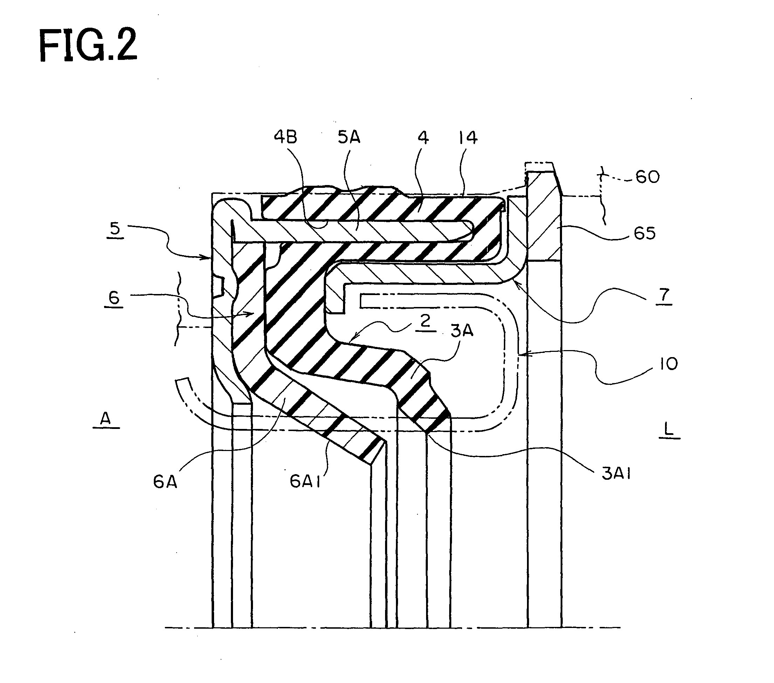

As described above, the shaft seal device 1 is constituted by various kinds of materials such as the seal portion which is made of a rubber material and the reinforcement annulus 5 and the support annulus 7 which are made of metal or hard resin material. The first seal lip 3 and the second seal lip 6 in their free from are represented as shown in FIG. 2. That is, the inner diameter of the first seal face 3A1 of the first seal lip 3 and the inner diameter of the second seal face 6A1 of the second seal lip 6 are arranged to be slightly smaller than the outer diameter of the slide seal face 10D of the seal sleeve 10. When the first seal lip 3 and the second seal lip 6 comes to a fit engagement with the seal sleeve 10, the first seal lip 3 and the second seal lip 6 undergo resilient deformation as shown in FIG. 1. Therefore a close-fit engagement of the first seal lip 3 and the second seal lip 6 with the seal sleeve 10 can be maintained by means of a contact due to resilient forces of the first seal lip 3 and the second seal lip 6.

This shaft seal device 1 is fittingly installed to a bore surface 61 of the housing 60. A snap ring 65 engages with the seal portion 2 in order to prevent the shaft seal device 1 from coming off the bore surface 61. Then the first seal lip 3 and the second seal lip 6 are assembled one another in such a manner that the first seal face 3A1 and the second seal face 6A1 are in seal-tight contact with the slide seal face 10D of the seal sleeve 10. The first seal lip 3 and the second seal lip 6 therefore are joined with each other via friction force due to tight-fit contact achieved therebetween. For example, even if an external force attempts to remove the seal sleeve 10 from the first seal lip 3 and the second seal lip 6, the partitioning portion 10A1 of the first stopper 10A will come to rest with the urging portion 7A of the support annulus 7. Or it will come to rest with the support surface 3B of the first seal lip 3. In the opposite direction, the second stopper 10B will come to rest with the inner periphery edge portion 5H of the support portion 5B. The seal sleeve 10 therefore can be prevented from coming off the first seal lip 3 and the second seal lip 6. Also a shaft seal device 1 can be kept in storage as a pre-assembled state of the first seal lip 3 and the second seal lip 6 relative to the seal sleeve 10. When the shaft seal device 1 is installed in machinery or facilities, the two elements are already joined with each other and therefore a problem such as a missing element can be resolved.

The slide seal face 10D of the seal sleeve 10 has a rolling-mill finished, smooth steel surface or resin mold surface, therefore requiring no additional finish for the slide seal face 10D. Also a friction coefficient of the slide seal face 10D can be reduced by applying a layer coating thereto such as coating a fluorocarbon resin or the like to the outer circumferential surface of the seal sleeve 10. Further, the first seal face 3A1 of the annular lip member 3A is protected by a cover provided by the first stopper 10A from a possible damage caused by colliding with other members.

The first seal face 3A1 and the second seal face 10A1 will be worn out after a long period of use. This will require a replacement to a new shaft seal device 1. In this case, a snap ring 65 is removed from the housing 60 first. Next, the shaft seal device 1 is taken out from the housing 60. At this stage, the second stopper 10B of the seal sleeve 10 is bent back to the original cylindrical form so as to be disengaged from the inner circumference of the reinforcement annulus 5. Since this second stopper 10B has a plurality of slits arranged along the circumference in equally spaced a manner or is slightly bent to a circular arc surface, it is straightforward to bend back. The seal sleeve 10 then is removed from the shaft seal device 1 in the axial direction. Removal of the reinforcement annulus 5 from the engagement recess portion 4B of the close-fit engagement portion 4 completes disassembly of the individual members of the shaft seal device 1. Separation to metal member, rubber member and resin members will enable reproduction and recycling of the individual members and materials.

### EMBODIMENT 2

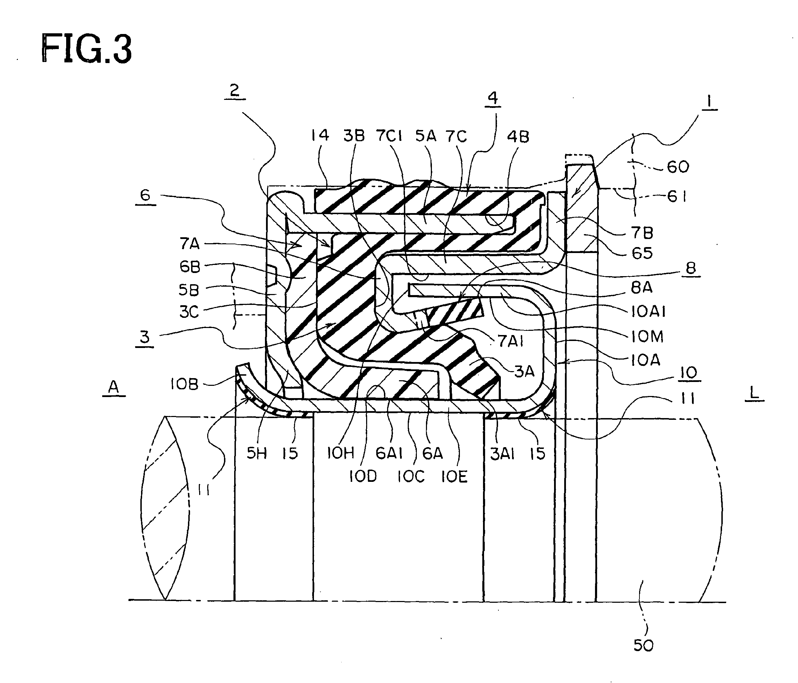

Next, a shaft seal device 1 of the embodiment 2 related to the present invention will be described. FIG. 3 is a cross sectional view of a half portion of the shaft seal device 1 related to the embodiment 2. What makes FIG. 3 different from FIG. 1 is that the urging portion 7A of the support annulus 7 is extended in L-shape so as to support the annular lip portion 3A such that the annular lip portion 3A does not expand radially outward. The end surface of the urging portion 7A is structured in a tooth form and fittingly mates with a stopper ring 8 which is made of rubber or resin material in detachable a manner. The stopper ring 8 can be brought to make a light contact with the inner circumferential surface 10M of the partitioning portion 10A1 so as to prevent impurities included in the sealed fluid from coming into the first seal face 3A1 side. Also the stopper ring 8 provides a support for restraining vibrations of the inner circumferential surface 10M during rotation. There also are disposed seal rings 11, 11 at the both ends of the inner circumferential fit engagement surface 10C of the seal sleeve 10, which provides a seal between the rotary shaft 50 and the inner circumferential fit engagement surface 10C. The seal rings 11, 11 are adhered to the first stopper 10A and the second stopper 10B at the both ends of the seal sleeve 10 by means of a plurality of engagement bores, not shown, so that they are easily separated from the seal sleeve 10 when the shaft seal device 1 is out of use and wasted. As for other arrangements in the embodiment 2, members designated by the same reference numerals in FIG. 1 imply more or less the same members in FIG. 1.

Described below is respective inventions of preferred examples related to the present invention

A shaft seal device as an invention of the second preferred embodiment related to the present invention is a shaft seal device wherein the seal portion further comprises a first seal lip and a second seal lip wherein the first seal lip is disposed in the inner circumference of the seal lip in which the first seal lip has a first seal face of a tapered rectangular cross section and forms a seal-tight contact with the slide seal face of the seal sleeve, wherein the second seal lip is disposed in parallel to the hind surface of the seal portion and is made of a resin material and has a second seal face in a cylindrical form therein in which the second seal face forms a seal-tight contact with the slide seal face of the seal sleeve, wherein the outer diameter of the first stopper is arranged larger than the outer diameter of the slide seal surface and the outer diameter of the second stopper is arranged larger than the outer diameter of the slide seal surface.

According to the shaft seal device related to the invention of the second embodiment, since there are disposed in the inner circumference a first seal lip which is made of a rubber resilient material and a second seal lip which is made of a resin material wherein the first seal lip has a first seal face of a tapered rectangular cross section which forms a seal-tight contact with the slide seal face of the seal sleeve and the second seal lip has a cylindrical second seal face which forms a seal-tight contact with the slide seal face of the seal sleeve, damage to the first seal face and the second seal face due to contacting with other members can be prevented. Seal performance of the first seal face and the second seal face is thereby exhibited. Close-fit engagement of the first seal face and the second seal face with the slide seal face of the seal sleeve not only realizes an integral structure of the shaft seal device but also simplifies assembly and disassembly of the shaft seal device because the first stopper and the second stopper prevents individual members from coming off.

A shaft seal device as an invention of the third preferred embodiment related to the present invention is a shaft seal device wherein a first stopper is formed in L-shape so as to surround the seal face and defines a stopper end portion at one end thereof in which the stopper end portion opposes the root portion of the seal lip such that the stopper end portion abuts the root portion when the seal sleeve makes a movement.

According to the shaft seal device related to the invention of the third embodiment, a first stopper is formed in L-shape which extends from the end of the slide seal face 10D and defines a stopper end portion at the distal end of the first stopper in which the stopper end portion abuts the root portion when the seal sleeve makes a movement. Therefore the close-fit engagement portion and the reinforcement annulus which are separable from each other can be retained in combination. Also as the stopper end portion and the root portion come to abut each other, not only the protection of the seal faces improves seal performance but also the first stopper securely prevents dismounting of the seal portion.

A shaft seal device as an invention of the fourth preferred embodiment related to the present invention is a shaft seal device which further comprises a support annulus wherein a cylindrical portion of the support annulus forms a fit engagement with the sealed fluid side of the close-fit engagement portion wherein the support annulus has an urging portion which abuts the root portion of the seal lip and the urging portion is configured so as to oppose the stopper end portion of the first stopper.

According to the shaft seal device related to the invention of the fourth embodiment, the support annulus has a cylindrical portion and an urging portion in which the cylindrical portion forms a fit engagement with the inner circumferential surface of the close-fit engagement portion and the urging portion abuts the root portion of the seal lip, wherein the urging portion is configured so as to oppose the stopper end portion of the first stopper. Therefore not only the support annulus retains the close-fit engagement portion and the reinforcement annulus which is inserted to the close-fit engagement portion in an integral manner but also the stopper end portion of the first stopper which comes to abut the urging portion prevents the seal sleeve from dismounting. At the same time, protection of the seal face side of the seal lip provided by the first stopper of the seal sleeve effectively improves seal performance.

### INDUSTRIAL APPLICABILITY

As described above, a shaft seal device related to the present invention is advantageous for enabling a material based assembly as well as disassembly so as to make recycling of members possible. The shaft seal device also is advantageous for being able to reduce a fabrication cost because of material based manufacturing of members. The shaft seal device is further advantageous for no more requiring of a polishing finish on the outer circumferential surface of the rotary shaft and preventing damage to the seal face of the seal lip. The shaft seal device is yet advantageous for reducing a replacement cost of the rotary shaft by preventing abrasion of the opposing slide face thereof which slides against the seal face.

## Claims

1. A shaft seal device for sealing a sealed fluid between the bore of a housing and a rotary shaft, said shaft seal device comprising:
a seal portion further comprising a close-fit engagement portion, an engagement recess portion, a seal lip and a seal face; said close-fit engagement portion having a fit engagement surface; said fit engagement surface being capable of making a tight-fit engagement with the bore surface of said housing; said engagement recess portion forming a groove in said close-fit engagement portion; said engagement recess portion has an opening in the side wall opposite said sealed fluid and extends toward said sealed fluid side; said engagement recess portion being arranged in an annular form; said seal lip being disposed in the inner circumference of said close-fit engagement portion and having an annularly-shaped integral structure; said seal face being disposed in the inner circumference of said seal lip and sealing a sealed fluid; said seal portion being made of a rubber resilient material; and
a reinforcement annulus further comprising a reinforcement portion and a support portion; said reinforcement portion providing a reinforcement for said close-fit engagement portion by matingly fitting said engagement recess portion of said close-fit engagement portion in freely detachable a manner; said support portion providing a support for the hind surface of said seal lip;
wherein there is disposed a seal sleeve which comprises a slide seal face, a first stopper, a second stopper and tight-fit engagement surface in which said slide seal face forms a slidable, seal-tight contact with said seal face of said seal portion, in which said first stopper is disposed in one end portion of said seal face side of said slide seal face so as to be able to abut said seal lip, in which said second stopper is disposed in the other end opposite said one end of said slide seal face so as to be able to abut said support portion, in which said tight-fit engagement surface forms a seal-tight contact with said rotary shaft, in which said seal sleeve is made of a metal or resin material.

2. A shaft seal device as claimed in claim 1 wherein said seal portion further comprises a first seal lip and a second seal lip; said first seal lip being disposed in the inner circumference of said seal lip; said first seal lip having a first seal face of a tapered rectangular cross section; said first seal lip forming a seal-tight contact with said slide seal face of said seal sleeve, said second seal lip being disposed in parallel to the hind surface of said seal portion; said second seal lip being made of a resin material; said second seal lip having a second seal face in a cylindrical form therein; said second seal face forming a seal-tight contact with said slide seal face of said seal sleeve, wherein the outer diameter of said first stopper is arranged larger than the outer diameter of said slide seal surface and the outer diameter of said second stopper is arranged larger than the outer diameter of said slide seal surface.

3. A shaft seal device as claimed in claim 1 or claim 2 wherein said first stopper is formed in L-shape so as to surround said seal face of said seal lip and defining a stopper end portion at one end thereof wherein said stopper end portion opposes the root portion of said seal lip so as to abut thereagainst when said seal sleeve makes a movement.

4. A shaft seal device as claimed in claim 3 wherein the shaft seal device further comprises a support annulus, wherein a cylindrical portion of said support annulus forms a fit engagement with said sealed fluid side of said close-fit engagement portion, wherein an urging portion of said support annulus abuts the root portion of said seal lip, wherein said urging portion is configured so as to oppose said stopper end portion of said first stopper.
